# EUROPÄISCHE PATENTANMELDUNG

(11) **EP 2 239 548 A2**
(43) Veröffentlichungstag der Anmeldung: **13.10.2010**
(21) Anmeldenummer: 10450051.7
(22) Anmeldetag: 30.03.2010
(51) Int. Cl.: G01K 1/02, G01K 1/14, G01K 1/16, G01K 15/00

(54) **Leiterseilsonde**

(30) Priorität: 08.04.2009 AT 5562009
(71) Anmelder: Microtronics Engineering GmbH, 3244 Ruprechtshofen (AT)
(72) Erfinder: Buber, Hans-Peter, 3243 St. Leonhard am Forst (AT)
(74) Vertreter: Patentanwaltskanzlei Matschnig & Forsthuber OG

(57) **Zusammenfassung**

Die Erfindung betrifft eine Leiterseilsonde (1) zur Messung der Temperatur von Leiterseilen (100), wobei die Leiterseilsonde (1) aus einem Gehäuse (2) besteht, welches Gehäuse (2) an einem Leiterseil (100) befestigbar ist, und wobei das Gehäuse (2) drei Temperatursensoren (20) aufnimmt, welche sich in befestigtem Zustand des Gehäuses (2) an dem Leiterseil (100) mit diesem Leiterseil (100) in Wärmeübergangskontakt befinden, und wobei in dem Gehäuse (2) Übertragungsmittel (3) angeordnet sind, mittels welcher Daten betreffend die von der Leiterseilsonde (1) ermittelten Temperatur des Leiterseiles (100) an einen entfernten Empfänger (201) übertragbar sind.

In dem Gehäuse (2) ist eine Auswerteeinheit (4) angeordnet, welche die von den Temperatursensoren (20, 21, 22) in einem vorgebaren Zeitfenster ermittelten Temperaturen hinsichtlich vorgebbarer Kriterien auswertet und daraus einen Temperaturwert ermittelt, und die Auswerteeinheit (4) übergibt diesen ermittelten Temperaturwert an die Übertragungsmittel (3) zur Übertragung an einen entfernten Empfänger (200, 201).

## Beschreibung

Die Erfindung betrifft eine Leiterseilsonde zur Messung der Temperatur von Leiterseilen, wobei die Leiterseilsonde aus einem Gehäuse besteht, welches Gehäuse an einem Leiterseil befestigbar ist, und wobei das Gehäuse einen Temperatursensor aufnimmt, welcher sich in befestigtem Zustand des Gehäuses an dem Leiterseil mit diesem Leiterseil in Wärmeübergangskontakt befindet, und wobei in dem Gehäuse Übertragungsmittel angeordnet sind, mittels welcher Daten betreffend die von der Leiterseilsonde ermittelten Temperatur des Leiterseiles an einen entfernten Empfänger übertragbar sind, das Gehäuse neben dem einen Temperatursensor zumindest einen weiteren Temperatursensor aufnimmt, wobei der zumindest eine weitere Temperatursensor in befestigtem des Gehäuses an dem Leiterseil mit diesem Leiterseil ebenfalls in Wärmeübergangskontakt zur Messung der Temperatur des Leiterseiles steht, und wobei in dem Gehäuse eine Auswerteeinheit angeordnet ist, welche Auswerteeinheit die von den Temperatursensoren in einem vorgebaren Zeitfenster ermittelten Temperaturen hinsichtlich vorgebbarer Kriterien auswertet und daraus einen Temperaturwert ermittelt, und die Auswerteeinheit diesen ermittelten Temperaturwert an die Übertragungsmittel zur Übertragung an einen entfernten Empfänger übergibt.

Bei Freileitungen bzw. Hochspannungsleitungen wird Energie bzw. Stromübertragung über nicht isolierte Leiterseile, welche an Freileitungs- bzw. Hochspannungsmasten aufgehängt sind, zwischen verschiedenen Orten übertragen.

Ein wichtiger Parameter im Zusammenhang mit diesen Leiterseilen ist der so genannte Leiterseildurchhang, der wie der Name schon sagt den Durchhang des Leiterseiles angibt. Die Leitseile sind nun beispielsweise derart ausgelegt, dass bei einer Spannung von 110kV und einem durch das Leiterseil fließenden Strom mit einer Stromstärke von 700 Ampere der Durchhang auch unter kritischen äußeren Bedingungen noch innerhalb der erlaubten Werte liegt.

Wesentlichen Einfluss auf den Leiterseildurchhang hat die Temperatur des Leiterseiles. Diese hängt natürlich einerseits von der Stärke des durchfließenden Stromes ab, andererseits an natürlich von äußeren Parametern wie Windgeschwindigkeit, Lufttemperatur, etc. Bereits eine geringe Windgeschwindigkeit kann bereits zu einer signifikanten Verringerung der Temperatur des Leiterseiles führen.

Für einen Netzbetreiber ist einerseits der sichere und zuverlässige Betrieb seiner Anlagen von Bedeutung, andererseits ist ein wesentlicher Aspekt natürlich auch die Wirtschaftlichkeit des Betriebes seiner Anlagen. Es wäre daher wünschenswert, wenn es die jeweiligen Bedingungen erlauben, Strom auch mit einer höheren Stromstärke zu übertragen, als mit den beispielsweise oben angegebenen Stromstärken von 700 Ampere.

Im Zuge einer Leiterseilüberwachung wird es nun unter anderem möglich, auf den tatsächlichen Leiterseildurchhang zurück zu schließen und entsprechend kann die Stromstärke gegebenenfalls erhöht werden, um auch höhere Stromstärken übertragen zu können.

An dieser Stelle wird auf die Dissertation "Einsatz von passiven funkabfragbaren Oberflächenwellensensoren in der elektrischen Energietechnik" von Frau Dipl.-Ing. Renata Teminova vom 6. Juni 2007 verwiesen, welche eine ausführliche Abhandlung der Theorie des Leiterseildurchhanges und der relevanten Einflussgrößen auf den Durchhang des Leiterseiles enthält. Weiters werden in dieser Dissertation in Kapitel 2.2 die aktuellen Monitoring-Verfahren zur Leiterseilüberwachung erwähnt, welche derzeit in Verwendung sind.

Grundsätzlich weisen alle diese Verfahren Nachteile auf, entweder weil sie aufwändig sind, zu ungenau oder sich für eine permanente Ermittlung des Leiterseildurchhanges nicht oder nur bedingt eignen. Beispielsweise sind Geräte am Boden (Laser- oder Ultraschallverfahren) kompliziert, teuer und eben für eine permanente Überwachung nicht geeignet. Bei der Temperaturüberwachung mittels eingezogener Glasfasern müssten bestehende Leiterseile ausgetauscht werden bzw. ist ein Netzbetreiber bei der Neueinrichtung von Anlagen oder dem Anbringen neuer bzw. Austauschen alter Leiterseile auf einen oder wenige Anbieter von Leiterseilen eingeschränkt.

Für einfache, kostengünstige und vergleichsweise zuverlässige Monitoring-Verfahren eignet sich daher besonders die direkte Temperaturmessung lokal an der Oberfläche der Leiterseile. Bei dieser Methode werden eingangs erwähnte Leiterseilsonden verwendet, welche an den Leiterseile angebracht werden, wodurch diese sich auch für eine permanente Leiterseilüberwachung sehr gut eignen und eine Überwachung bereits bestehender Anlagen problemlos möglich ist, und wobei ein Temperatursensor der Leiterseilsonde die Temperatur des Leiterseiles misst. Diese Temperatur wird dann an einen fernen Empfänger übermittelt, diese Werte einer geeigneten Verarbeitungseinrichtung zuführt.

Eine Leiterseilsonde zur Verwendung in einem solchen Monitoring-Verfahren ist im Detail in der oben genannten Dissertation beschrieben. Ein wichtiger Aspekt ist, dass der ermittelte Temperaturwert zuverlässig die tatsächliche Temperatur darstellt, da die Leiterseiltemperatur ja eine wichtige Einflussgröße für den Leiterseildurchhang ist.

Mit einer eingangs erwähnten Leiterseilsonde kann die Temperatur des Leiterseiles ermittelt werden; solche Leiterseilsonden sind beispielsweise aus der US 5 341 088 A, der US 4 808 917 A und der EP 1 574 822 A1 bekannt.

Durch die Anordnung von zumindest zwei Temperatursensoren in einer Leiterseilsonde kann auf einfache Weise bereits in der Leiterseilsonde überprüft werden, ob die ermittelten Temperaturwerte zuverlässig die tatsächliche Leiterseiltemperatur wieder spiegeln. Die zu einem bestimmten Zeitpunkt ermittelten Temperaturwerte der Sensoren werden dabei einer Auswerteeinheit in der Leiterseilsonde zugeführt, und diese wertet die Temperaturwerte nach vorgebbaren Kriterien aus. Beispielsweise überprüft die Auswerteeinheit, wie gut die Temperaturwerte übereinstimmen und verwirft die Messung der beiden Sensoren, wenn die Temperaturwerte um einen bestimmten vorgegebenen Betrag voneinander abweichen.

Es ist eine Aufgabe der Erfindung, eine solche bekannte Leiterseilsonde dahingehend zu verbessern, dass die Zuverlässigkeit der Messung noch erhöht ist.

Diese Aufgabe wird dadurch gelöst, dass erfindungsgemäß das Gehäuse genau drei Temperatursensoren enthält.

Bei nur einem Sensor ist der man darauf angewiesen, dem ermittelten Wert zu vertrauen. Bei zwei Sensoren kann man aus Abweichungen der von den Temperatursensoren ermittelten Temperaturen des Leiterseiles bereits feststellen, ob die Messungen in Ordnung oder fehlerhaft sind.

Bei drei Sensoren ist es in der Regel bei abweichenden Messergebnissen bereits möglich zu validieren, welcher Sensor die falschen Messergebnisse liefert. Grundsätzlich erhöht eine Erhöhung der Anzahl der Sensoren die Messzuverlässigkeit weiter, allerdings um den Preis, dass eben mehr als 3 Sensoren eingebaut werden müssen, was die Kosten für die Leiterseilsonde erhöht, und außerdem steigt der Rechenaufwand in der Auswerteeinheit mit der Anzahl der Sensoren. Aus diesen Gründen haben sich für die meisten Anwendungen 3 Sensoren als optimal herausgestellt.

Unter einem "Zeitfenster" kann dabei verstanden werden, dass die Messungen der beiden oder der mehreren Sensoren absolut gleichzeitig stattfinden, also praktisch jeweils zu einem definierten Zeitpunkt. Typischweise handelt es sich aber um ein tatsächliches, in der Regel kurzes Zeitfenster, in welchem dann auch mehrere Messungen pro Sensor stattfinden können; von Vorteil ist es natürlich, wenn dieses Zeitfenster möglichst klein ist, die Messungen als quasi gleichzeitig stattfinden, damit die Messungen bei möglichst gleichen Bedingungen stattfinden.

Ein typischer Wert für die Dauer eines solchen Zeitfensters beträgt 400 µSekunden, in dieser Zeitspanne finden beispielsweise 20 Messungen statt.

Mit solchen Mehrfachmessungen (sogenannte "Micromessungen") kann eine Auflösungserhöhung durchgeführt werden. In diesem Fall ergibt sich der von einem Sensor zu einem Zeitpunkt (welcher dem Zeitfenster zugeordnet ist) ermittelte Temperaturwert aus mehreren Messwerten, z.B. aus 20 Einzelmessungen in diesem Zeitfenster. Diese Ermittlung des Temperaturwertes eines Sensors in einem Zeitfenster/Zeitpunkt aus einer Anzahl Micromessungen erfolgt dabei vorzugsweise ebenfalls in der Auswerteeinheit. Beispielsweise ergibt sich der Temperaturwert des Sensors zu dem konkreten Zeitpunkt als Median aller erfassten Messwerte des Sensors in dem Zeitfenster.

Jeder der drei Sensoren liefert entsprechend zu einem konkreten Zeitpunkt jeweils einen solchen Temperaturwert, und aus den drei Temperaturwerten der drei Sensoren wird dann für den definierten Zeitpunkt der "tatsächliche" Temperaturmesswert in der Auswerteeinheit ermittelt, welcher von der Leiterseilsonde dann an einen Empfänger übermittelt wird.

Es kann also für jeden Vergleich jeder Sensor genau einen Temperaturmesswert liefern, von Vorteil ist aber, wenn pro Sensor jeweils mehrere Temperaturwerte für die Auswertung verwendet werden, was die Zuverlässigkeit der Aussage/Messung erhöht.

Die erfindungsgemäße Leiterseilsonde bietet den Vorteil, dass bereits in der Seilsonde eine Validierung der gemessenen Temperaturwerte erfolgt und nur Werte übertragen werden, welche sich als plausibel herausstellen.

Bei Verwendung von mehreren Seilsonden mit jeweils einem Sensor zur Validierung der gemessenen Temperaturwerte wäre es notwendig, mehrere Sonden benachbart zueinander an einem Leiterseil anzubringen, was einen mehrfachen Montageaufwand bedeutet. Es werden mehrere Seilsonden benötigt, im Gegensatz zu einer erfindungsgemäßen, und es werden alle Temperaturwerte der einzelnen Seilsonden an einen Empfänger übertragen, welcher dann erst eine Validierung durchführen kann.

Bei der erfindungsgemäßen Leiterseilsonde kann hingegen die zu übertragende Datenmenge reduziert werden (nicht mehrere Temperaturwerte sondern nur einer, und dieser nur, wenn er plausibel ist), es wird nur eine Seilsonde mit nur einer Übertragungseinrichtung benötigt, der Montageaufwand ist vergleichsweise gering, und der ferne Empfänger der Temperaturwerte wird nicht mit der Validierung der Temperaturwerte belastet, da diese bereits in der Seilsonde selbst erfolgt.

Weiters ist es zweckmäßig, wenn das Gehäuse im Kontaktierungsbereich mit dem Leiterseil mit einer thermischen Isolierung versehen ist oder aus thermisch isolierendem Material besteht. Bei dem Kontaktierungsbereich handelt es sich im Wesentlichen um den Bereich des Gehäuses um die Temperatursensoren herum.

Die thermische Isolierung, welche als zusätzliches Bauteil an dem Gehäuse anzubringendes Bauteil ausgebildet sein kann oder mit dem Gehäuse einstückig ausgebildet sein kann, dient zur Vermeidung von Einflüssen der Leiterseilsonde auf die Leiterseiltemperatur, die sich zwangsweise ergibt, wenn die Oberfläche des Seils durch die Leiterseilsonde vergrößert wird, wodurch es zu einer lokalen Abkühlung kommt, welche entsprechend die Temperaturmessung verfälscht. Mit der thermischen Isolierung kann diese Verfälschung minimiert oder ganz verhindert werden.

Bei einer konkreten Ausgestaltung der erfindungsgemäßen Leiterseilsonde besteht das Gehäuse aus einem Metall, vorzugsweise aus Aluminium, und die thermische Isoliderung im Kontaktierungsbereich der Leiterseilsonde besteht aus zumindest einer thermische isolierende Isolierplatte, welche im Kontaktierungsbereich der Leiterseilsonde mit dem Leiterseil angebracht ist, wobei die Isolierplatte Öffnungen für die Temperatursensoren aufweist.

Das Gehäuse ist aus Metall, vorzugsweise aus Aluminium gebildet, um elektrochemische Reaktionen mit dem Aluminium des Leiterseils zu verhindern (Thema saurer Regen), außerdem weist die Leiterseilsonde dann eine maximale UV-Beständigkeit auf. Der Isolierteil ist hinsichtlich der Materialwahl eher unkritisch und wird aus Polyethylen oder ähnlichem gefertigt.

Weiters ist es von Vorteil, wenn die Leiterseilsonde zumindest eine Speichervorrichtung aufweist, welche zumindest zum Zwischenspeichern von Daten betreffend Temperaturmesswerte eingerichtet ist.

Im Prinzip ist es denkbar, dass die Leiterseilsonde einen Temperaturmesswert wie oben beschrieben ermittelt und sofort an den Empfänger übermittelt. Dies ist üblicherweise allerdings nicht notwendig und auch nicht immer zweckmäßig, und es kann daher zweckmäßig sein, die Messwerte nur in regelmäßigen Intervallen (z.B. jede Minute, alle 15 Minuten, alle 60 Minuten, ...) zur übermitteln oder eine Übermittlung nur auf Anfrage des Empfängers zu starten. In diesen Fällen ist die Speichervorrichtung zweckmäßig, in welcher die Temperaturmesswerte zumindest solange gespeichert werden können, bis sie an den Empfänger übermittelt wurden.

Schließlich ist es noch von Vorteil, wenn die Leiterseilsonde zumindest eine Betriebssignalquelle zum Darstellen des Betriebszustandes der Leiterseilsonde umfasst. Die "Darstellung" kann dabei beispielsweise akustisch erfolgen, vorzugsweise erfolgt diese aber optisch, etwa indem die Betriebssignalquelle eine Signallampe, z.B. eine LED-Signallampe umfasst, welche den aktuellen Status der Sonde durch Blinkcodes anzeigt. Diese Einrichtung ist vor allem bei der Installation von Wichtigkeit, da bei der Montage der Betriebszustand bekannt ist.

Die Betriebssignalquelle gibt Auskunft darüber, ob die Sonde in Reichweite des Empfängers ist, ob der Batteriezustand in Ordnung ist (Batterie Voll) und ob alle Sensoren ohne Fehler (Verifizierung OK) arbeiten (dies sollte bei der Inbetriebnahme auf alle Fälle gegeben sein). Alle diese Status Informationen können in der Zentrale auch abgefragt werden, aber im Zeitpunkt der Montage ist es für den Monteur wichtig, dass er diese Informationen unmittelbar zur Verfügung hat.

Im Folgenden ist die Erfindung an Hand der Zeichnung näher erläutert. In dieser zeigt
Fig. 1 eine schematische Ansicht von Leiterseilen einer Freileitung mit daran befestigten erfindungsgemäßen Leiterseilsonden,
Fig. 2 eine perspektivische Ansicht einer erfindungsgemäßen Leiterseilsonde mit Blick auf die Temperatursensoren,
Fig. 3 eine weitere perspektivische Ansicht der Leiterseilsonde, und
Fig. 4 ein schematisches Blockschaltbild einer erfindungsgemäßen Leiterseilsonde.

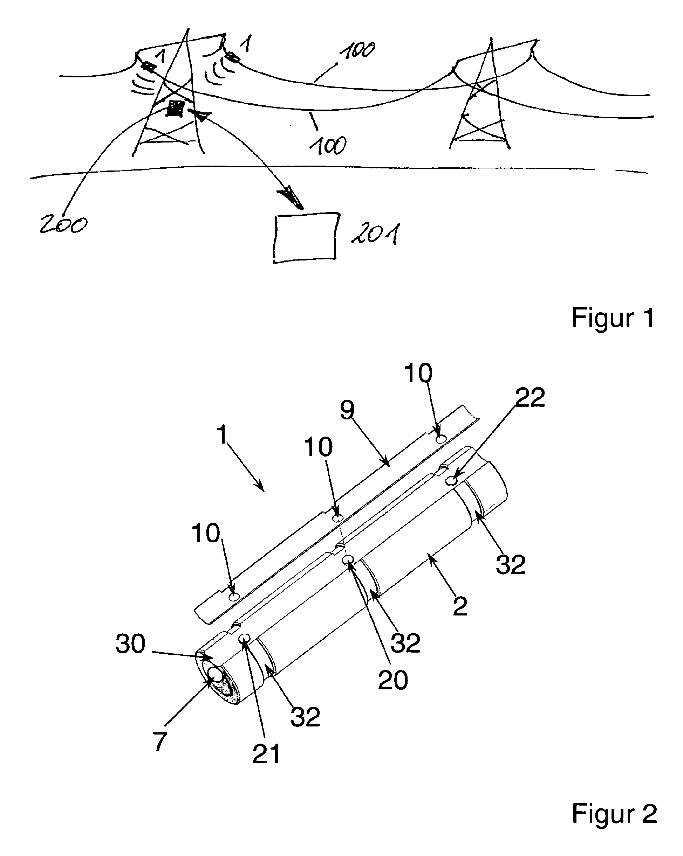

Figur 1 zeigt schematisch Leiterseilsonden 1, welche an Leiterseilen 100, die an Hochspannungsmasten einer Hochspannungsleitung aufgehängt sind, angeordnet sind. Die Leiterseilsonden 1 übermitteln gemessene Temperaturwerte zur weiteren Verarbeitung der Temperaturmesswerte an einen entfernten Empfänger 201. Die Übermittlung kann dabei direkt an diesen Empfänger 201 erfolgen, vorzugsweise befindet sich aber in der Nähe der Leiterseilsonden ein Zwischenempfänger 200, welcher die Daten von mehreren im zugeordneten, in seiner Nähe angeordneten Leiterseilsonden 1 empfängt und diese dann an den fernen Empfänger 201 weiterleitet.

Die Übermittlung der Daten von dem Zwischenempfänger 200 an den entfernten Empfänger 201 kann kabelgebunden oder über Funk, vorzugsweise über ein Mobilfunknetz erfolgen.

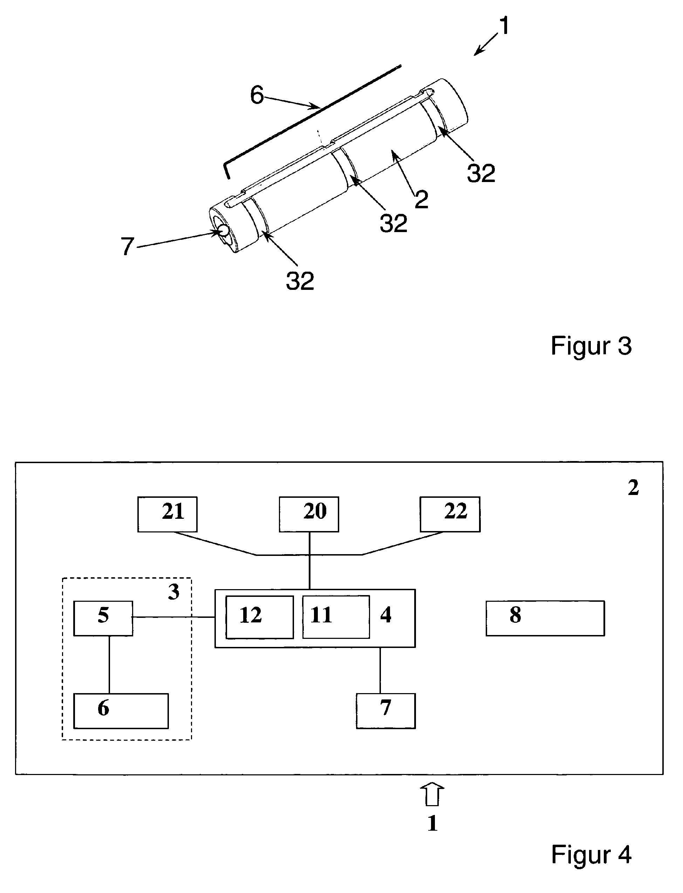

Figur 2 und Figur 3 zeigen unterschiedliche perspektivische Ansichten einer erfindungsgemäßen Leiterseilsonde 1, welche zur Messung der Temperatur eines Leiterseiles 100 verwendet wird.

Die Leiterseilsonde 1 besteht aus einem Gehäuse 2 besteht, wobei das Gehäuse 2 an einem Leiterseil 100 befestigbar ist. Dazu ist bei der gezeigten Variante das Gehäuse 2 Wesentlichen als länglicher Zylinder ausgebildet, dessen Mantel entlang der Längsachse des Mantels eine Vertiefung 30 aufweist, welche der Gestalt eines Leiterseiles 100 angepasst ist, sodass dieses Leiterseil 100 bei einer Montage der Sonde 1 in dieser Vertiefung 30 zu liegen kommt.

Weiters sind Befestigungsvertiefungen 32 in dem Gehäusemantel vorgesehen, in diesem können Spanngurte oder ähnliches eingelegt und mit diesen die Leiterseilsonde 1 an dem Leiterseil 100 befestigt werden.

Bei der gezeigten bevorzugten Variante einer erfindungsgemäßen Leiterseilsonde 1 besteht das Gehäuse 2 aus einem Metall, vorzugsweise aus Aluminium. Weiters ist eine thermische Isolierung im Kontaktierungsbereich der Leiterseilsonde 1 mit dem Leiterseil 100, also im bereich der Vertiefung 30 vorgesehen. Diese Isolierung besteht aus einer thermisch isolierenden Isolierplatte 9, welche die Vertiefung 30 abdeckt, sodass das Leiterseil 100 das Aluminium des Gehäuses 2 nicht berührt. Die Isolierplatte 9 ist entsprechend der Form der Vertiefung 30 gekrümmt ausgebildet. Die Isolierplatte 9 ist an dem Gehäuse beispielsweise angeklebt.

Zur Temperaturmessung weist die Leiterseilsonde 1 mehrere Temperatursensoren 20, 21, 22 auf, welche in dem Gehäuse 2 untergebracht sind und zumindest teilweise aus diesem im Bereich der Vertiefung 30 herausragen. Damit die Sensoren 20, 21, 22 mit dem Leiterseil 100 in Wärmeübergangskontakt treten können, weist auch die Isolierplatte Öffnungen 10 für die Temperatursensoren 20, 21, 22 auf, durch welche Öffnungen 10 die Sensoren 20, 21, 22 ragen.

Figur 4 zeigt den schematischen Aufbau einer erfindungsgemäßen Leiterseilsonde 1. Wie schon aus Figur 1 und 2 erkennbar, verfügt die gezeigte Sonde 1 über drei Temperatursensoren 20, 21, 22.

In dem Gehäuse 2 ist eine Auswerteeinheit 4 angeordnet ist, an welche die Sensoren 20, 21, 22 die gemessenen Temperaturmesswerte übermitteln. Die Auswerteeinheit 4 besteht in dem gezeigten Beispiel aus einem Mikrokontroller 12 und einem Speicher 11.

Die Auswerteeinheit 4 verarbeitet die von den Sensoren 20, 21, 22 gelieferten Temperaturmesswerte und übergibt diese an Übertragungsmittel 3, mittels welcher Daten betreffend die übergebenen Temperaturmesswerte des Leiterseiles 100 an den Zwischenempfänger 200 gesendet werden, welcher diese Daten an den entfernten Empfänger 201 überträgt.

Die Daten selbst enthalten zumindest den jeweiligen ermittelten Temperaturmesswert und den Zeitpunkt, zu welchem dieser am Leiterseil "gemessen" wurde.

Die Übertragungsmittel 3 umfassen in der gezeigten Variante ein Modem 5, z.B. ein RF-Modem ("Radio Frequency") sowie eine Antenne 6, über welche das Modem an den Zwischenempfänger 200 Daten drahtlos übermittelt. Die Antenne 6 ist, wie Figur 3 zu entnehmen ist, an der Außenseite des Gehäuses 2 in einer eigenen Vertiefung.

Zur Stromversorgung ist eine Energiequelle 8 vorgesehen, welche alle Komponenten des Seilsonde 1 mit Energie speist. Bei der Energiequelle 8 kann es sich um eine Batterie handeln oder die Energiequelle 8 speist sich aus dem Leiterseil induktiv über eine Induktionsschleife.

Üblicherweise ist die Übertragungseinrichtung 3 nicht nur zum Senden von Daten sondern auch zum Empfangen von Daten bzw. Befehlen eingerichtet, sodass eine Kommunikation in beiden Richtungen stattfinden kann.

Wie schon erwähnt, wertet die Auswerteeinheit 4 die von den Temperatursensoren 20, 21, 22 in einem vorgebaren Zeitfenster ermittelten Temperaturen hinsichtlich vorgebbarer Kriterien aus und ermittelt daraus einen Temperaturwert für den durch dieses Zeitfenster definierten Zeitpunkt. Das Zeitfenster kann dabei so klein gewählt werden, dass jeder Sensor tatsächlich jeweils nur einen Wert für die Temperatur liefert, typischerweise wird es aber größer gewählt, damit jeder Sensor 20, 21, 22 mehrere Messwerte liefern kann. Gleichzeitig wird das Fenster so klein gehalten, dass die Messungen bei möglichst gleichen Bedingungen stattfinden.

Jeder Sensor liefert einen Temperaturwert für ein bestimmtes Zeitfenster, welcher sich entweder durch eine Einmalmessung in dem Zeitfenster oder vorzugsweise durch Mehrfachmessungen ergibt, aus welcher Mehrfachmessung dann der "eine Temperaturwert" des Sensors für dieses Zeitfenster ermittelt wird.

Hinsichtlich der Kriterien, nach welchen die Auswerteeinheit diese drei (bei drei Sensoren in dem konkreten Beispiel) Temperaturwerte verarbeitet kann dann weiters z.B. vorgesehen sein, dass lediglich ein Mittelwert gebildet wird, welcher als "die" Temperatur des Leiterseils zu dem dem Zeitfenster entsprechenden Zeitpunkt angenommen und weiter geleitet wird.

Vorzugsweise überprüft aber die Auswerteeinheit, wie gut die (drei) Temperaturwerte der Sensoren übereinstimmen und verwendet nur jene Werte von Sensoren, die innerhalb einer gewissen Bandbreite zueinander liegen. Misst beispielsweise ein Sensor 40°C, der zweite Sensor 42°C und der dritte Sensor 70°C, so kann angenommen werden, dass der Dritte Sensor falsch misst und es werden nur die ersten beiden Sensoren zur Ermittlung der aktuellen Temperatur verwendet. Natürlich kann auch vorgesehen sein, dass in einem solchen Fall die gesamte Messung verworfen und erst die zeitlich nächste Messung wieder verwendet wird.

Liegen über einen längeren Zeitraum größere Abweichungen vor, so kann auch davon ausgegangen werden, dass die Leiterseilsonde nicht mehr ordnungsgemäß funktioniert und diese muss einem Service unterzogen werden. Bei einer Sonde mit nur einem Sensor wäre eine solche Feststellung nicht möglich.

Im Prinzip ist es denkbar, dass die Leiterseilsonde einen Temperaturmesswert wie oben beschrieben ermittelt und sofort an den Empfänger übermittelt. Dies ist üblicherweise allerdings nicht notwendig und auch nicht immer zweckmäßig, und es kann daher zweckmäßig sein, die Messwerte nur in regelmäßigen Intervallen (z.B. jede Minute, alle 15 Minuten, alle 60 Minuten, ...) zur übermitteln oder eine Übermittlung nur auf Anfrage des Empfängers zu starten. In diesen Fällen ist die Speichervorrichtung 11 zweckmäßig, in welcher die Temperaturmesswerte zumindest solange gespeichert werden können, bis sie an den Empfänger 200 übermittelt wurden.

Schließlich ist es noch von Vorteil, wenn die Leiterseilsonde zumindest eine Betriebssignalquelle 7 (Fig.2 - 4) zum Darstellen des Betriebszustandes der Leiterseilsonde umfasst. Die "Darstellung" kann dabei beispielsweise akustisch erfolgen, vorzugsweise erfolgt diese aber optisch, etwa indem die Betriebssignalquelle eine Signallampe, z.B. eine LED-Signallampe 7 umfasst, welche den aktuellen Status der Sonde durch Blinkcodes anzeigt. Diese Einrichtung ist vor allem bei der Installation von Wichtigkeit, da bei der Montage der Betriebszustand bekannt ist.

Die hier beschriebenen Arten der Ermittlung der Temperatur des Leiterseiles zu einem bestimmten Zeitpunkt mit mehreren Temperatursensoren einer Leiterseilsonde stellen beispielhafte bevorzugte Ermittlungsarten dar, es ist aber nicht ausgeschlossen, dass auch andere Verarbeitungskriterien verwendet werden.

## Patentansprüche

1. Leiterseilsonde (1) zur Messung der Temperatur von Leiterseilen (100), wobei die Leiterseilsonde (1) aus einem Gehäuse (2) besteht, welches Gehäuse (2) an einem Leiterseil (100) befestigbar ist, und wobei das Gehäuse (2) einen Temperatursensor (20) aufnimmt, welcher sich in befestigtem Zustand des Gehäuses (2) an dem Leiterseil (100) mit diesem Leiterseil (100) in Wärmeübergangskontakt befindet, und wobei in dem Gehäuse (2) Übertragungsmittel (3) angeordnet sind, mittels welcher Daten betreffend die von der Leiterseilsonde (1) ermittelten Temperatur des Leiterseiles (100) an einen entfernten Empfänger (201) übertragbar sind, wobei das Gehäuse (2) neben dem einen Temperatursensor (20) zumindest einen weiteren Temperatursensor (21, 22) aufnimmt, wobei der zumindest eine weitere Temperatursensor (21, 22) in befestigtem des Gehäuses (2) an dem Leiterseil (100) mit diesem Leiterseil (100) ebenfalls in Wärmeübergangskontakt zur Messung der Temperatur des Leiterseiles (100) steht, und wobei in dem Gehäuse (2) eine Auswerteeinheit (4) angeordnet ist, welche Auswerteeinheit (4) die von den Temperatursensoren (20, 21, 22) in einem vorgebaren Zeitfenster ermittelten Temperaturen hinsichtlich vorgebbarer Kriterien auswertet und daraus einen Temperaturwert ermittelt, und die Auswerteeinheit (4) diesen ermittelten Temperaturwert an die Übertragungsmittel (3) zur Übertragung an einen entfernten Empfänger (200, 201) übergibt, **dadurch gekennzeichnet, dass** das Gehäuse (2) genau drei Temperatursensoren (20, 21, 22) enthält.

2. Sonde nach Anspruch 1, **dadurch gekennzeichnet, dass** das Gehäuse (2) im Kontaktierungsbereich mit dem Leiterseil (100) mit einer thermischen Isolierung versehen ist oder aus thermisch isolierendem Material besteht.

3. Sonde nach Anspruch 2, **dadurch gekennzeichnet, dass** das Gehäuse (2) aus einem Metall, vorzugsweise aus Aluminium besteht und dass im Kontaktierungsbereich der Leiterseilsonde zumindest eine thermische isolierende Isolierplatte angebracht ist, welche Öffnungen (10) für die Temperatursensoren (20, 21, 22) aufweist.

4. Sonde nach einem der Ansprüche 1 bis 3, **dadurch gekennzeichnet, dass** zumindest eine Speichervorrichtung (11) vorgesehen ist, welche zumindest zum Zwischenspeichern von Daten betreffend Temperaturmesswerte eingerichtet ist.

5. Sonde nach einem der Ansprüche 1 bis 4, **dadurch gekennzeichnet, dass** sie zumindest eine Betriebssignalquelle (7) zum Darstellen des Betriebszustandes der Leiterseilsonde umfasst.
